# EUROPÄISCHE PATENTSCHRIFT

(11) **EP 1 036 283 B1**
(45) Veröffentlichungstag und Bekanntmachung des Hinweises auf die Patenterteilung: **11.04.2001**
(21) Anmeldenummer: 98959889.1
(22) Anmeldetag: 30.11.1998
(51) Int. Cl.: F16H 63/32

(54) **12-GANG-GETRIEBE FÜR NUTZFAHRZEUGE**
12-SPEED GEARBOX FOR UTILITY VEHICLES
BOITE A 12 VITESSES POUR VEHICULES UTILITAIRES

(30) Priorität: 04.12.1997 DE 19753728
(43) Veröffentlichungstag der Anmeldung: 20.09.2000
(73) Patentinhaber: ZF FRIEDRICHSHAFEN Aktiengesellschaft, 88038 Friedrichshafen (DE)
(72) Erfinder: NITZSCHKE, Rüdiger, D-88080 Langenargen (DE); SCHEPPERLE, Bernd, D-78464 Konstanz (DE)
(86) Internationale Anmeldenummer: EP9807652
(87) Internationale Veröffentlichungsnummer: WO9930063

(56) Entgegenhaltungen:
- WO-A-86/03858
- WO-A-90/15272
- US-A- 3 396 610

## Beschreibung

Die Erfindung bezieht sich auf ein 12-Gang-Getriebe für Nutzfahrzeuge in 2x3x2-Bauweise gemäß dem Oberbegriff des Patentanspruches 1.

Derartige Getriebe weisen üblicherweise eine pneumatisch betätigte Vorschalt- oder Splitgruppe, ein 3-Gang-Hauptgetriebe und eine pneumatisch betätigte Nachschalt-bzw. Bereichsgruppe auf. Für das Hauptgetriebe ist eine Schalteinrichtung vorgesehen, die Schaltschienen aufweist, an denen Schalthebel montiert sind, die auf Synchronisierungspakete zwischen den einzelnen Gangstufen des Hauptgetriebes zugreift. Häufig ist die Schalteinrichtung analog zu Schalteinrichtungen für 16-Gang-Getriebe, wodurch sich allerdings ein ungünstiges Schaltbild ergibt: die Gänge werden nicht fortlaufend in einem Zug in abwechselnden Schaltrichtungen geschaltet, es verbleibt vielmehr im Laufe der sechs zu schaltenden Gänge eine Lücke im Schaltbild, die zwischen dem zweiten und fünften Gang liegt. Nach dem dritten Gang wird der Schalthebel nicht in einem Zuge gerade in dem vierten Gang durchgeführt, sondern muß durch die Leerlaufstellung wiederum in die gleiche Richtung wie der dritte Gang gezogen werden. Erst der fünfte Gang kann dann vom vierten Gang in einem Zug geschaltet werden.

Der Erfindung liegt die Aufgabe zugrunde, ein 12-Gang-Getriebe für Nutzfahrzeuge so zu modifizieren, dass eine Schaltung des Hauptgetriebes in einem Zug möglich ist.

Diese Aufgabe ist gemäß der Erfindung durch die Merkmale des Patentanspruches 1 gelöst.

Demnach wird jeder ansonsten von der Schaltschiene betätigte Schalthebel, der in die Synchronisierungspakete des Getriebes eingreift, ersetzt durch eine Kreuzgelenkverbindung aus einer Schaltschwinge und einem Umlenkhebel, wobei die Schaltschwinge gehäusefest gelagert ist und Schaltschwinge und Umlenkhebel jeweils durch eine eigene Schaltschiene betätigt werden. Ein Eingriff in das Synchronpaket über einen Umlenkhebel erfolgt bei Betätigen des Umlenkhebels gleichsinnig, bei Betätigen der Schaltschwinge gegensinnig. Die Synchronisierungspakete des Getriebes werden dann entweder mit dem Umlenkhebel oder mit der Schwinge betätigt, so dass sich die Möglichkeit ergibt, das Getriebe in einem Zug durchzuschalten.

Bei einer derartigen Ausführung des 12-Gang-Getriebes können über eine Schaltschiene gegebenenfalls mehr als zwei Gänge geschaltet werden, so z. B. die Gänge 4, 5 und 6. Dadurch greift diese Schaltschiene in beide Synchronisierungspakete des Hauptgetriebes ein. Um nicht zwei Gänge gleichzeitig zu schalten, werden die Abstützpunkte der Umlenkhebel variiert. Der jeweils nicht abgestützte Hebel macht in diesem Falle eine Leerbewegung. Die Abstützpunkte werden entweder mechanisch oder mechanisch/pneumatisch in Abhängigkeit von der Drehwellenstellung angelegt, wobei das Anlegen der Abstützpunkte kräftefrei erfolgt. Aufgrund der gewählten Systematik des Schaltvorganges des Getriebes sind die Abstützpunkte bereits vor dem Abstützvorgang an ihre Stelle gebracht, so dass hierfür keine Kräfte benötigt werden. Nur beim Wegnehmen der Abstützpunkte beim Schalten von einigen Gängen ist eine allerdings sehr geringe Ausschaltkraft erforderlich.

Die gewählte Konstruktion der einzelnen Schalthebel aus einer Schwinge und einem darauf schwenkbar gelagerten Umlenkhebel macht unterschiedliche Konstruktionen des Getriebes möglich. So kann das Getriebe zwischen dem ersten und zweiten Gang sowie zwischen dem zweiten und dritten Gang jeweils ein Synchronisierungspaket aufweisen, in die dann die Schwinge bzw. der Umlenkhebel eingreift. Auch bei einer Konstruktion mit Synchronisierungspaketen zwischen dem ersten und dem Rückwärtsgang sowie dem zweiten und dritten Gang ist eine Durchschaltung des Getriebes in einem Zuge möglich. Dies ist möglich durch die Realisierung einer Umlenkung der Schaltrichtung der oberen Gruppe des Getriebes durch die mit Umlenkhebeln kombinierten Schwingen.

Weitere Ausgestaltungen der Erfindung gehen aus den Unteransprüchen hervor.

Die Erfindung ist in Ausführungsbeispielen anhand der Zeichnung näher erläutert. In dieser stellen dar:
- Fig. 1A bis 1C: das übliche Schaltbild eines 12-Gang- Getriebes sowie zwei gewünschte Schaltbilder;
- Fig. 2: einen aus einer Schaltschwinge und einem Umlenkhebel kombinierten Schalthebel gemäß der Erfindung;
- Fig. 3: eine Ansicht des Schalthebels gemäß Fig. 2;
- Fig. 4: der Aufbau eines 12-Gang-Getriebes für einen Schalthebel gemäß der Erfindung;
- Fig. 5: eine schematische Darstellung der Schaltschienen und der Eingriffe von Schaltschwinge und Umlenkhebel in Synchronisierungspakete des Getriebes;
- Fig. 6: eine schematische Darstellung eines modifizierten Aufbaues eines 12-Gang-Getriebes für Schalthebel gemäß der Erfindung;
- Fig. 7: eine schematische Darstellung der Schaltschienen und der Eingriffe von Umlenkhebel und Schwinge in die Synchronisierungspakete des Getriebes und
- Fig. 8A bis 8D: schematische Darstellungen der Bewegungen von Schaltschiene und Umlenkhebel und der Abstützpunkte für den Umlenkhebel.

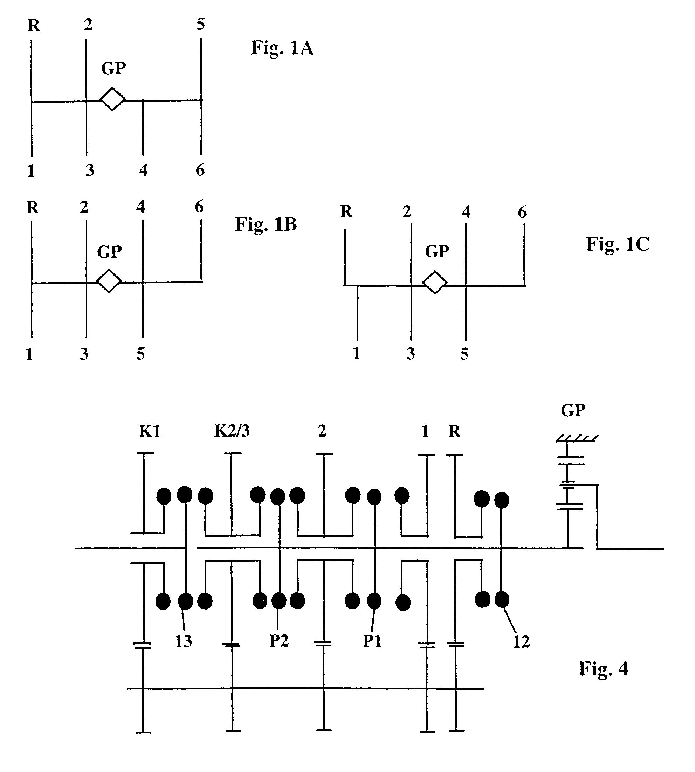

In Fig. 1A ist schematisch das Schaltbild eines herkömmlichen 12-Gang-Getriebes in 2x3x2-Bauart dargestellt. Man sieht, dass zwischen dem zweiten und fünften Gang eine Schaltlücke herrscht und das Getriebe nicht in einem Zug durchgeschaltet werden kann. Erwünschte Schaltbilder sind in Fig. 1B und 1C dargestellt: Im Falle der Fig. 1B laufen die Schaltgänge in jeweils abwechselnden Schaltrichtungen in einem Zug vom Gang 1 bis zum Gang 6. In diesem Falle liegt dem ersten Gang der Rückwärtsgang direkt gegenüber. Das Schaltbild gemäß Fig. 1C erlaubt ebenfalls ein Durchschalten des Getriebes vom ersten bis zum sechsten Gang in abwechselnden Schaltbewegungen, wobei der Rückwärtsgang gegenüber dem ersten Gang abgesetzt ist.

Mit GP ist die Nachschalt- bzw. Bereichsgruppe bezeichnet, die es erlaubt, die drei Gänge des Hauptgetriebes in sechs Gängen zu zerlegen.

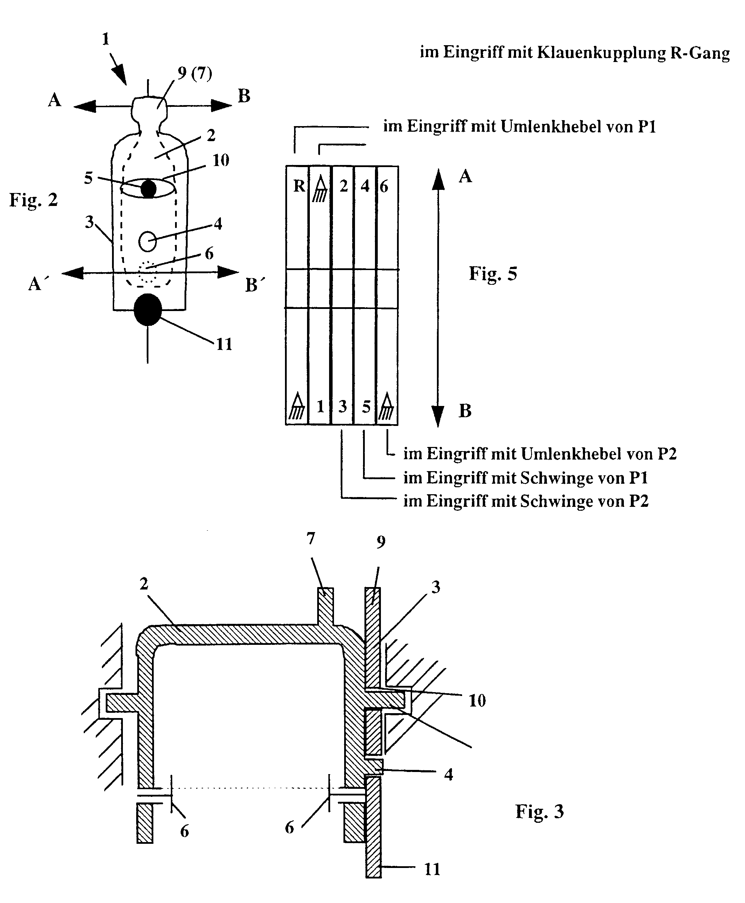

In den Fig. 2 und 3 ist ein Schalthebel 1 dargestellt, mit dem ein zügiges Durchschalten des Getriebes möglich ist. Der Schalthebel 1 besteht aus einer Schwinge 2 und einem Umlenkhebel 3, der um eine Achse 4 der Schwinge 2 schwenkbar gelagert ist. Die U-förmige Schwinge 2 ist oberhalb dieser Achse entsprechend Fig. 3 mit einer zur Achse 4 parallelen Achse 5 gehäusefest gelagert und greift mit ihrem unteren Ende jenseits der Achse 4 bei 6 in ein Synchronisierungspaket P1 oder P2 des Getriebes (Fig. 4) ein. Die Schwinge 2 weist auf dem anderen, oberen Ende einen Zapfen 7 auf, der von einer Schaltschiene 8 (Fig. 5) der Schalteinrichtung angesteuert wird. Der Umlenkhebel 3 weist ebenfalls an seinem oberen Ende benachbart zu dem Zapfen 7 der Schaltschiene einen Zapfen 9 auf, der ebenfalls von einer Schaltschiene 8 angesteuert wird. Die gehäusefeste Achse 5 umgreift der Umlenkhebel 3 mit einem Langloch 10, so dass er um die Achse 4 in beide Richtungen verschwenkt und in seinem unteren Bereich in ein Synchronisierungspaket des Getriebes eingreifen kann. Der Umlenkhebel 9 ist an seinem unteren Ende über eine gehäusefeste Achse 11 bzw. eine entsprechende Abstützung schwenkbar gelagert. Für jedes Synchronisierungspaket des Getriebes ist ein derartiger Schalthebel vorgesehen.

Bewegt man die Schaltschwinge in Richtung A, dann wird die Synchronisierung des Synchronisierungspaketes in Richtung B' geschaltet. Bewegt man den Umlenkhebel in Richtung A, so wird die Synchronisierung in Richtung A' geschaltet. Das bedeutet, dass bei der Betätigung der Schaltschwinge die Synchronisierbewegung gegenläufig und bei einer Bewegung des Umlenkhebels gleichsinnig ist.

Diese Schaltschwingen können nun in Verbindung mit einem Getriebe gemäß Fig. 4 verwendet werden, indem zwischen dem ersten und zweiten Gang ein Synchronisierungspaket Pl und zwischen dem zweiten und dritten Gang ein weiteres Synchronisierungspaket P2 geschaltet ist, in die jeweils der Umlenkhebel und die Schaltschwinge der zwei Schalthebel eingreifen. Durch die Kreuzgelenkkonstruktion von Schaltschwinge und Umlenkhebel wird die Schaltrichtung der oberen Gruppe jeweils umgelenkt, wobei bei dem Getriebe gemäß Fig. 2 der zweite Gang von beiden Seiten geschaltet werden kann. Für den Rückwärtsgang R ist eine Klauenkupplung 12 vorgesehen. Zusätzlich sind noch gezeigt die beiden Stufen Kl und K2 der Vorschalt- bzw. Splitgruppe mit der Synchronisierung 13 und die Nachschalt- bzw. Bereichsgruppe GP. Eingezeichnet sind auch noch die Schaltrichtungen A und B, die mit denen in Fig. 2 übereinstimmen.

In Fig. 5 ist schematisch die Anordnung der Schaltschienen 8 dargestellt; hier ist eine Schaltschiene der oberen Gruppe für den Rückwärtsgang, und jeweils eine Schaltschiene für den zweiten, vierten und sechsten Gang vorgesehen. Für die untere Gruppe sind drei Schaltschienen für die Gänge 1, 3 und 5 vorgesehen, die beiden äußeren Schaltschienen dieser Gruppe sind gesperrt, ebenso oben die Schaltschiene zwischen dem Rückwärtsgang und dem zweiten Gang. Für den Rückwärtsgang ist die linke Schaltschiene in Eingriff mit der Klauenkupplung 12. Für den ersten Gang ist die zweite Schaltschiene in Eingriff mit dem Umlenkhebel am Synchronisierungspaket Pl. Die dritte Schaltschiene für den zweiten und dritten Gang steht in Eingriff mit der Schwinge an dem Paket P2. Die vierte Schaltschiene für den vierten und fünften Gang greift in die Schwinge am ersten Synchronpaket P1 und für den sechsten Gang greift der Umlenkhebel am Synchronisierungspaket P2 in die rechte Schaltschiene. Damit können sämtliche sechs Gänge in einem Zug in jeweils gegenläufigen Bewegungen durchgeschaltet werden.

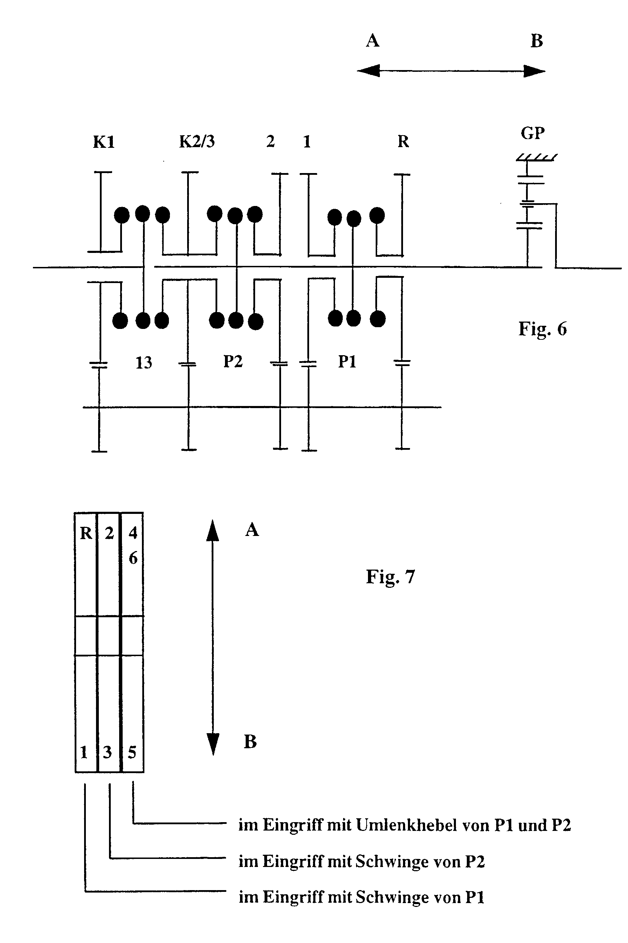

In Fig. 6 ist ein modifiziertes Getriebe gezeigt, bei dem das Synchronisierungspaket P1 zwischen dem Rückwärtsgang und dem ersten Gang und das Synchronisierungspaket P2 zwischen dem zweiten und dritten Gang gelegen ist. Die Splitgruppe ist gleich aufgebaut wie bei dem Getriebe gemäß Fig. 4, ebenso die Bereichsgruppe GP.

In Fig. 7 ist die Schaltschienenanordnung für dieses Getriebe nach Fig. 6 gezeigt. Hier sind für die obere und untere Gruppe drei Schaltschienen vorgesehen, wobei über die Schaltschiene für den ersten und den Rückwärtsgang ein Eingriff der Schaltschwinge an dem Paket Pl vorliegt. Für die Schaltschiene des zweiten und dritten Ganges liegt jeweils ein Eingriff der Schwinge am Paket P2 und für die Schaltschiene der Gänge 4, 5 und 6 jeweils ein Eingriff der Umlenkhebel an den Paketen P1 und P2 vor. Um bei dieser Konstruktion für die Gänge 4, 5 und 6 nicht zwei Gänge gleichzeitig zu schalten, wird der untere Abstützpunkt für den Umlenkhebel variiert. Der Umlenkhebel weist hierzu an seinem unteren Ende eine Nase 14 auf, so dass er sich zu beiden Seiten mit dieser Nase und einem unteren Bogenbereich 15 abstützen kann. Dies gilt nur für die obere Gruppe, während in der unteren Gruppe die unteren Abstützpunkte beider Umlenkhebel entfallen können. In der oberen Gruppe werden die Abstützpunkt nach folgendem Schema angelegt:

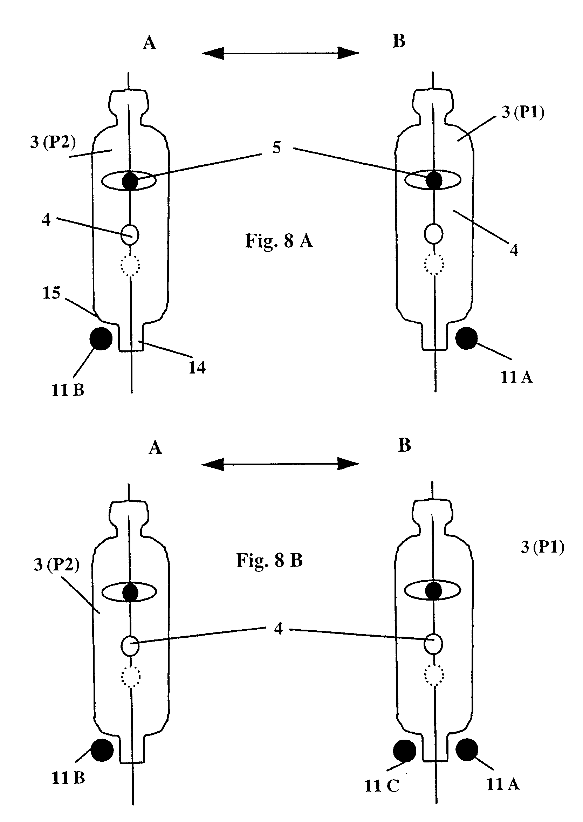

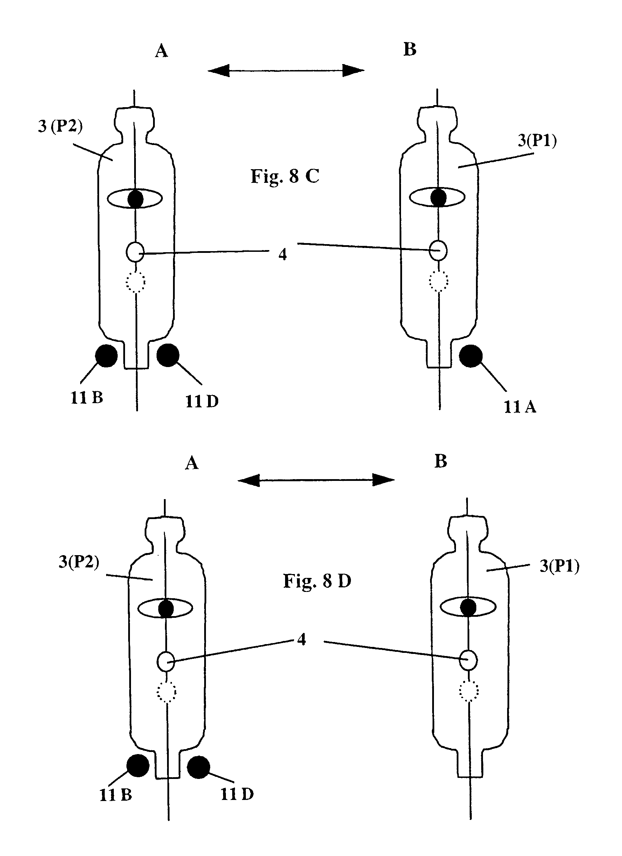

In Fig. 8A bis 8D sind jeweils die Schalthebel 3 für das erste und das zweite Synchronisierungspaket P1 bzw. P2 mit den Schaltrichtungen A und B gezeigt. Zum Anwählen in die Gasse zwischen den Gängen 4 und 5 werden jeweils zwei äußere Abstützpunkte 11A bzw. 11B für den Umlenkhebel 3 des Synchronisierungspaketes P1 bzw. den Umlenkhebel 3 für das Synchronisierungspaket P2 eingerichtet, wie dieses in Fig. 8A gezeigt ist. Beim Schalten in den vierten Gang wird ein innerer Abstützpunkt 11C für den Umlenkhebel 3 für das Paket P1 eingerichtet (Fig. 8B), beim Schalten in den fünften Gang wird ein innerer Abstützpunkt 11D für den Umlenkhebel 3 für das Paket 2 angelegt (Fig. 8C), während das Wählen in die Gasse 6 durch Anlegen des äußeren und inneren Abstützpunktes 11B und 11D für den Umschalthebel 3 für das zweite Synchronisierungspaket P2 ermöglicht wird (Fig. 8D). Bei den Schaltbewegungen führt der jeweils nicht abgestützte Umlenkhebel eine Leerbewegung aus.

Die Abstützpunkte werden, wie oben erwähnt mechanisch oder mechanisch/pneumatisch in Abhängigkeit von der Drehwellenstellung angelegt. Damit ist ein kraftfreies und vorauseilendes Anlegen der Abstützstellen durch die Wählbewegung möglich, wodurch sich ebenfalls das gewünschte 12-Gang-Schaltbild ergibt.

### Bezugszeichen

- 1: Schalthebel
- 2: Schaltschwinge
- 3: Umlenkhebel
- 4: Achse in 2
- 5: Achse
- 6: Eingriffspunkt
- 7: Zapfen
- 8: Schaltschiene
- 9: Zapfen
- 10: Langloch
- 11A - 11D: Abstützpunkte
- 12: Klauenkupplung
- 13: Synchronisierung der Splitgruppe
- 14: Nase
- 15: Bogenbereich

- P1, P2: Synchronisierungspakete
- R: Rückwärtsgang
- K1, K2: Schaltstufen der Splitgruppe
- GP: Nachschalt- oder Bereichsgruppe

## Patentansprüche

1. 12-Gang-Getriebe für Nutzfahrzeuge in 2x3x2-Bauweise, mit einer pneumatisch betätigten Vor- oder Splitgruppe, einem 3-Gang-Hauptgetriebe und einer pneumatisch betätigten Nachschalt- bzw. Bereichsgruppe (GP), mit einer Schalteinrichtung, die Schaltschienen (8) aufweist, über die Schalthebel (1) angesteuert werden, die auf Synchronisierungspakete (P1, P2) zugreifen, dadurch **gekennzeichnet,** dass jeder Schalthebel (1) ein Kreuzgelenk aus einer Schaltschwinge (2) und einem Umlenkhebel (3) ist, die jeweils von einer eigenen Schaltschiene (8) angesteuert werden, dass die Schaltschwinge (2) zwischen der Kreuzgelenkachse (4) und der Schaltschiene um eine gehäusefeste Achse (5) verschwenkbar ist, dass die Schaltschwinge (7) an ihrem einen Ende (7) mit einer Schaltschiene (8) und an ihrem anderen Ende mit einem Synchronisierungspakete (P1, P2) des Getriebes in Verbindung steht, und dass der Umlenkhebel (3) an seinem einen Ende (9) von einer Schaltschiene (8) angesteuert und an seinem anderen Ende um einen gehäusefesten Abstützpunkt (11A) schwenkbar ist und an der Schwinge (2) zwischen dem zweiten Ende und der gehäusefesten Achse (5) drehbar gelagert ist.

2. Getriebe nach Anspruch 1, dadurch **gekennzeichnet,** dass der gehäusefeste Abstützpunkt (11) für den Umlenkhebel (3) variierbar (11A, B, C, D) ist.

3. Getriebe nach Anspruch 1 oder 2, dadurch **gekennzeichnet**, dass das Getriebe zwischen dem ersten und zweiten Gang sowie zwischen dem zweiten und dritten Gang jeweils ein Synchronisierungspaket (P1, P2) aufweist, in das jeweils eine Schwinge (2) und ein Umlenkhebel (3) eingreifen.

4. Getriebe nach Anspruch 1 oder 2, dadurch **gekennzeichnet**, dass das Getriebe zwischen Rückwärtsgang (R) und erstem Gang und zwischen zweitem und dritten Gang jeweils ein Synchronisierungspaket (P1, P2) aufweist, in die eine Schwinge (2) und ein Umlenkhebel (3) eingreifen.

## Claims

1. 2x3x2-style 12-speed transmission for utility vehicles, having a pneumatically operated front or split group, a 3-speed main gear and a pneumatically operated downstream and/or range group (GP), having a shift device comprising shift rails (8), which are used to control shift levers (1), which access synchronizing assemblies (P1, P2), characterized in that each shift lever (1) is a universal joint comprising a shift rocker (2) and a reversing lever (3), which are controlled in each case by a separate shift rail (8), that the shift rocker (2) is capable of swinging between the universal joint axle (4) and the shift rail about a housing-fixed axle (5), that the shift rocker (7) is in communication at its one end (7) with a shift rail (8) and at its other end with a synchronizing assembly (P1, P2) of the transmission, and that the reversing lever (3) at its one end (9) is controlled by a shift rail (8) and at its other end is capable of swivelling-about a housing-fixed support point (11A) and is rotatably supported against the rocker (2) between the second end and the housing-fixed axle (5).

2. Transmission according to claim 1, characterized in that the housing-fixed support point (11) for the reversing lever (3) is variable (11A, B, C, D).

3. Transmission according to claim 1 or 2, characterized in that between the first and second gear as well as between the second and third gear the transmission comprises in each case a synchronizing assembly (P1, P2), into which in each case a rocker (2) and a reversing lever (3) engage.

4. Transmission according to claim 1 or 2, characterized in that between reverse gear (R) and first gear as well as between second and third gear the transmission comprises in each case a synchronizing assembly (P1, P2), into which a rocker (2) and a reversing lever (3) engage.

## Revendications

1. Boîte de vitesses à 12 rapports pour véhicules industriels en version 2x3x2 dotée d'un doubleur de gamme monté en amont à commande pneumatique, d'une boîte de base à trois rapports et d'un groupe-relais à train épicycloïdal (GP) à commande pneumatique, d'un bloc de commande muni de fourchettes de commande (8), par l'intermédiaire desquelles sont commandés des leviers de commande (1), qui coopèrent avec un mécanisme de synchronisation (P1, P2), **caractérisée** en ce que chacun des leviers de commande (1) est un joint de cardan constitué d'une réglette (2) et d'un levier de renvoi (3), qui sont respectivement commandés par une propre fourchette de commande (8), en ce que la réglette (2) entre l'axe du joint de cardan (4) et la fourchette de commande peut pivoter autour d'un axe solidaire du carter (5), en ce que une extrémité (7) de la réglette (7) est liée à une fourchette de commande (8) et l'autre extrémité à un mécanisme de synchronisation (P1, P2) de la boîte de vitesses, et en ce que une extrémité (9) du levier de renvoi (3) est commandé par une fourchette de commande (8) et en ce que l'autre extrémité dudit levier de renvoi peut pivoter autour d'un point d'appui (11A) solidaire du carter, et en ce que le levier de renvoi est réalisé à émerillon au niveau de la réglette (2) entre la deuxième extrémité et l'axe (5) solidaire du carter.

2. Boîte de vitesses selon la revendication 1, **caractérisée** en ce que le point d'appui (11) solidaire du carter pour le levier de renvoi (3) est variable (11A, B, C, D).

3. Boîte de vitesses selon les revendications 1 ou 2, **caractérisée** en ce que la boîte de vitesses est munie respectivement entre le 1er et le 2ème rapport et entre le 2ème et le 3ème rapport d'un mécanisme de synchronisation (P1, P2), avec lequel engrènent respectivement une réglette (2) et un levier de renvoi (3).

4. Boîte de vitesses selon les revendications 1 ou 2, **caractérisée** en ce que la boîte de vitesses est munie respectivement entre la marche arrière (R) et le 1er rapport et entre le 2ème et le Sème rapport d'un mécanisme de synchronisation (P1, P2), avec lesquels engrènent respectivement une réglette (2) et un levier de renvoi (3).
